**Europäisches Patentamt**

**European Patent Office**

**Office européen des brevets**

(11) Veröffentlichungsnummer: **0 168 002**
A2

(12) # EUROPÄISCHE PATENTANMELDUNG

(21) Anmeldenummer: **85108361.8**

(22) Anmeldetag: **05.07.85**

(51) Int. Cl.⁴: **B 60 J 7/06**
**B 60 P 7/14**

(30) Priorität: **06.07.84 DE 3425016**

(43) Veröffentlichungstag der Anmeldung:
**15.01.86 Patentblatt 86/3**

(84) Benannte Vertragsstaaten:
**AT BE CH FR GB LI NL**

(71) Anmelder: **Krein, Walter**
**Waldstrasse 19**
**D-8903 Bobingen(DE)**

(72) Erfinder: **Krein, Walter**
**Waldstrasse 19**
**D-8903 Bobingen(DE)**

(74) Vertreter: **Patentanwälte Dipl.-Ing. R. Holzer Dipl.-Ing.**
**(FH) W. Gallo**
**Philippine-Welser-Strasse 14**
**D-8900 Augsburg(DE)**

(54) **Schiebeverdeck-Planengestell.**

(57) Die Erfindung betrifft ein Schiebeverdeck-Planengestell, insbesondere für Lastkraftwagen und Anhänger, bestehend aus zwei von vertikalen Stützen getragenen Längsspriegeln und von diesen verschiebbar geführten Querspriegeln. Die Längsspriegel sind als Führungsschienen zur Führung von mit den Querspriegeln direkt verbundenen Schiebekörpern ausgebildet. Die Längsspriegel dienen auch zur verschiebbaren Führung von Pendeltrennwänden.

,/...

EP 0 168 002 A2

PATENTANWÄLTE
DIPL. ING. R. HOLZER
DIPL. ING. (FH) W. GALLO
... STRASSE 14
... PATENTAMT
... REPRESENTATIVES
... AN PATENT OFFICE
... ES PRES L'OFFICE
... BREVETS
8900 AUGSBURG
TELEFON 0821/516475
TELEX 532202 PATOL D

**0168002**

Augsburg, den 4. Juli 1985

Walter   K r e i n ,

Waldstraße 19,

8903   B o b i n g e n


Schiebeverdeck-Planengestell


Die Erfindung betrifft ein Schiebeverdeck-Planengestell, insbesondere für Lastkraftwagen und Anhänger, nach dem Oberbegriff des Anspruchs 1.

Schiebeverdecke sind bei Lastkraftwagen und Anhängern wünschenswert, um einerseits ein Beladen von oben zu ermöglichen und andererseits das Ladegut während der Transportfahrt vollständig abzudecken und gegen Witterungseinflüsse zu schützen. Dabei soll das Schiebeverdeck leicht und schnell zu öffnen und zu schließen sein. Im geöffneten Zustand soll die Ladefläche möglichst frei sein. Außerdem soll das Planengestell schnell und leicht abbaubar und wieder aufbaubar sein.

Bei einem aus der DE-PS 30 14 385 bekannten Schiebeverdeck-Planengestell der eingangs genannten Gattung sind die Querspriegel über scherenartig angeordnete und bewegliche Stützstreben auf Rollenwagen abgestützt, die auf den als Führungsschienen ausgebildeten Längsspriegeln verfahrbar sind. Gleichzeitig verbinden die scherenartigen Stützstreben die Querspriegel untereinander derart, daß

beim Öffnen des Verdecks sich die von den Stützstreben paarweise gebildeten Scheren schließen und die Querspriegel unter gleichzeitigem Anheben zusammengeschoben werden. Zum Öffnen und Schließen des bekannten Schiebeverdecks dient ein vom Boden aus bedienbarer Seiltrieb mit einer über Umlenkrollen und eine Seiltrommel geführten Seilschlaufe, die am hintersten Rollenwagen befestigt ist. Eine der Umlenkrollen muß dabei am hinteren Längsspriegelende angeordnet sein, um beim Schließen des Schiebeverdecks den hintersten Rollenwagen bis zum hinteren Längsspriegelende zurückziehen zu können.

Die über Stützstreben-Scherenanordnungen und Rollenwagen auf den Längsspriegeln verfahrbar abgestützten Querspriegel der bekannten Anordnung bedingen natürlich eine entsprechend aufwendige und kostenträchtige Konstruktion. Außerdem ist das hintere Längsspriegelende als Fixpunkt für die Seilumlenkung des zum Öffnen und Schließen des Schiebeverdecks dienenden Seiltriebs notwendig und trägt ebenso wie die Tatsache, daß die Rollenwagen gegen Abheben gesichert auf den Längsspriegeln geführt und die Querspriegel alle durch die Stützstreben-Scherenanordnungen untereinander und mit den Rollenwagen verbunden sind, dazu bei, daß im Bedarfsfall ein Abbau und Wiederaufbau des Planengestells wenig praktikabel ist und insbesondere von den höchstens zwei Mann Besatzung eines Lastzuges kaum allein durchgeführt werden kann.

Der Erfindung liegt demgegenüber die Aufgabe zugrunde, ein Schiebeverdeck-Planengestell der eingangs genannten Gattung dahingehend auszubilden, daß es leicht, von einfacher und kostengünstiger Konstruktion, trotzdem leicht zu öffnen und zu schließen und von einer Lastwagenbesatzung allein ohne Schwierigkeiten auf- und abbaubar ist.

- 8 -

Diese Aufgabe wird bei einem Schiebeverdeck-Planengestell der in Rede stehenden Gattung gemäß der Erfindung durch die im kennzeichnenden Teil des Anspruchs 1 angegebenen Konstruktionsmerkmale gelöst.

Zum Öffnen des erfindungsgemäßen Schiebeverdecks kann in an sich bekannter Weise ein Seiltrieb Anwendung finden, dessen Seil am hintersten Querspriegel befestigt und auf eine im Bereich des vorderen Endes der Ladefläche angeordnete Seiltrommel aufspulbar ist. Zum Öffnen des Schiebeverdecks genügt ein ebenfalls am hintersten Querspriegel befestigtes Zugseil oder dergleichen, mittels welchem das Schiebeverdeck nach hinten in seine Schließstellung gezogen werden kann, ohne daß dazu ein Seiltrieb erforderlich ist. Die einzelnen Querspriegel sind erfindungsgemäß durch flexible Zwischenglieder, nämlich Verbindungsgurte oder ähnliches miteinander verbunden, die sich beim Schließen des Verdecks spannen und dadurch die richtigen gegenseitigen Abstände der Querspriegel sich während des Schließvorgangs automatisch einstellen.

Die erfindungsgemäße Konstruktion hat den Vorteil eines sehr einfachen konstruktiven Aufbaus, demzufolge auch einer sehr kostengünstigen Herstellbarkeit, und außerdem ist die gesamte Konstruktion gewichtsmäßig leicht und läßt sich jederzeit einfach auseinandernehmen bzw. zusammenbauen, wenn, beispielsweise um den Ladevorgang zu erleichtern, das Planengestell vollständig oder teilweise abgenommen werden soll. Da bei dem erfindungsgemäßen Schiebeverdeck-Planengestell wegen seiner leichten Bauweise kein doppeltwirkender Seiltrieb zum Öffnen und Schließen notwendig ist und dadurch auch ein am hinteren Längsspriegelende angeordneter Seilumlenkungsfixpunkt sowie die übrige komplizierte und gegen Abgleiten des Seils empfindliche Seilumlenkungsmechanik entbehrlich sind, wird das Auf- und Abbauen des Planengestells beträchtlich erleichtert.

Vorteilhafte Ausgestaltungen der Erfindung sind Gegenstand der Unteransprüche.

Demgemäß sind die Schiebekörper vorzugsweise als Gleitkörper ausgebildet, die um eine vertikale Achse drehbar mit den Querspriegeln verbunden sind. Dadurch wird ein Verkanten der Schiebekörper mit Bezug auf die Führungsschienen auch dann vermieden, wenn beim Öffnen oder Schließen ein einseitiger Zug auf die Querspriegel wirkt, da dann die Schiebekörper stets parallel zur Führungsschiene laufen können, selbst wenn sich die Querspriegel im Verlaufe ihrer Verschiebung etwas schräg stellen sollten.

Die Längsspriegel sind zweckmäßigerweise als die Schiebekörper aufnehmende Hohlprofil-Führungsschienen ausgebildet. Dadurch sind die Schiebekörper gleichzeitig gegen äußere Einwirkungen geschützt.

Die Schiebekörper sind zweckmäßig als längliche Prismenkörper ausgebildet, deren Länge ausreichend groß gewählt ist, um ein Verkanten in den Führungsschienen sicher zu vermeiden. Aber um in der Öffnungsstellung des Schiebeverdecks die Querspriegel trotzdem möglichst eng aneinander anliegend zusammenschieben zu können, sind die Schiebekörper vorzugsweise zwar mit über ihre ganze Länge verlaufenden, mit Führungsflächen der Führungsschienen zusammenwirkenden Gleitflächen, jedoch teilweise ineinanderschiebbar gestaltet. Dies läßt sich dadurch realisieren, daß die Schiebekörper an ihren beiden Enden mit zueinander komplementären Querschnittsprofilen ausgebildet sind, bei denen jeweils ein Teil ihres Umfangs durch eine Gleitfläche gebildet ist. Damit lassen sich die Schiebekörper mit ihren Endabschnitten zusammenschieben, obwohl sich mindestens Teile ihrer Gleitflächen über ihre ganze Länge erstrecken. Beispielsweise kann das eine Ende dieses Schiebekörpers gabelartig und das andere Ende dazu komplementär stegartig ausgebildet sein. Auch diagonal versetzte Zapfenprofile oder dergleichen sind möglich.

Um mit geringstmöglichem Wartungsaufwand hinsichtlich Schmierung usw. auskommen zu können, sind die Gleitkörper vorzugsweise aus reibungsarmem Kunststoff hergestellt.

Die Längsspriegel des Planengestells können geteilt ausgebildet und ihre Längenabschnitte mittels einer Schnellkupplung trennbar bzw. verbindbar sein, so daß auch ein teilweiser Abbau des Planengestells im Bedarfsfall schnell und einfach möglich ist.

Um die lichte Höhe des Laderaums unter dem Schiebeverdeck den Erfordernissen der jeweiligen Ladung anpassen zu können, ist auch eine Höhenverstellung des Schiebeverdecks wünschenswert. Dazu sind die vertikalen Stützen vorteilhafterweise im hohlen Rungen aus- und einschiebbar geführt und in bestimmten Vertikalpositionen arretierbar. Diese Art der Höhenverstellbarkeit eines Planengestells ist an sich bereits bekannt (DE-OS 31 83 338).

Die hohle Ausbildung der Rungen für die Höhenverstellbarkeit des Planengestells erfordert natürlich eine gewisse Dicke der Rungen. Damit werden aber die herkömmlichen, außen auf die Rungen aufgesetzten Bordwandverschlüsse zum Problem, denn einerseits darf die Außenbreite des Fahrzeugs den gesetzlichen Höchstwert von 2,50 m nicht überschreiten, andererseits soll das Richtmaß zwischen den Rungen beiderseits der Ladefläche nicht kleiner als 2,42 m sein, um eine bestimmte Anzahl genormter Paletten zwischen den Lichtraumbegrenzungen beiderseits der Ladefläche unterbringen zu können. Damit verbleibt für die maxiamle Rungendicke einschließlich der Bordwandverschlüsse nur noch ein Maß von etwa 4 cm. Die Erfindung schlägt deshalb seitlich an den Rungen anbringungsfähige Bordwandverschlüsse vor, die aus einem Bolzen und zwei konzentrischen, relativ zueinander drehbaren Hülsen besteht, wobei die beiden Hülsen jeweils mit einem seitlichen Einführungsschlitz zum Einführen des Bolzens versehen sind. Dabei ist eine der beiden Hülsen mit einem Betätigungsorgan zum Drehen versehen, während von den beiden anderen Teilen das eine an der Bordwand und das andere an der hohlen Runge befestigt ist. Wird nun die eine Hülse mittels des Betätigungsorgans so gedreht, daß sich die seitlichen Einführungsschlitze beider Hülsen decken, kann der Bolzen ein- oder ausgeführt werden, und wird die eine Hülse so gedreht, daß die Einführungsschlitze beider Hülsen sich nicht mehr überdecken, bis der eingeführte Bolzen in der Hülsenanordnung verriegelt. Zweckmäßigerweise hat der Bolzen einen im Durchmesser verdickten Kopf, dessen rückwärtige Stirnfläche mit einer entsprechenden axialen Schulter der inneren Hülse zusammenwirkt, um den Bolzen auch gegen axialen Herausgleiten aus der Hülsenanordnung zu sichern. Das Betätigungsorgan kann ein Hebel sein, der in der Schließstellung des Bordwandverschlusses abknickbar ist und eine Nase aufweist, die bei abgeknicktem Hebel in eine entsprechende Öffnung der Runge eingreift, um den Hebel in der Schließstellung der Hülsenanordnung zu sichern.

Die Befestigung von Abdeckplanen an den Bordwänden erfolgt bekanntermaßen üblicherweise mit Hilfe von im Bereich der Planenkante angeordneten Ösen und an der Bordwand befestigten Schnurösen, auf welche die Plane mit ihren Ösen aufgesteckt und anschließend eine Schnur hindurchgezogen wird. Diese Art der Planenfixierung ist allerdings bei einem Schiebeverdeck hinderlich, da die
Plane auch bei gelöster Schnur dazu neigt, mit ihren
Ösen auf den Schnurösen der Bordwände hängenzubleiben
und dadurch das Öffnen und Schließen zu erschweren. Zur
Behebung dieses Problems ist dem erfindungsgemäßen Planengestell vorzugsweise eine Klemmvorrichtung zur Fixierung
der Plane an den Bordwänden zugeordnet, die aus einer
mit Abstand entlang der Bordwand verlaufend an dieser
gehalterten drehbaren Stange und aus damit starr verbundenen
finger- oder nockenartigen Klemmstücken besteht, die durch
Drehen der Stange zur Bordwand hin bzw. von dieser wegschwenkbar sind. Hiermit läßt sich das Fixieren bzw. Lösen
der Plane auch bedeutend schneller bewerkstelligen als
mit der herkömmlichen Verschnürung.

Um auf einer mit einem Schiebeverdeck abgedeckten
Ladefläche mehrere Arten von Schüttgütern getrennt voneinander transportieren zu können, ist es bereits bekannt,
im Zusammenhang mit Planengestellen Pendeltrennwände
vorzusehen, die an einer bestimmten Stelle der Ladefläche,
beispielsweise im Bereich der Mittelrungen, einsetzbar
und verriegelbar sind, um die Ladefläche in verschiedene
Abschnitte zur Aufnahme der verschiedenen Schüttgüter zu
unterteilen. Um hier die Einsatzmöglichkeiten im Hinblick
auf eine variable Unterteilung der Laderaumfläche zu verbessern, sind gemäß einer Weiterbildung der Erfindung die
Längsspriegel mit Längsführungen zum Verschieben solcher
Pendeltrennwände in Längsrichtung der Ladefläche versehen.
Auf diesem Längsführungen der Längsspriegel können die
Pendeltrennwände auf Rollen verfahrbar sein. Damit ist
eine variable Laderaumunterteilung möglich, wobei lediglich in gewissen kurzen Abständen Arretierungsmöglichkeiten für die Pendeltrennwände vorgesehen sein müssen.

Üblicherweise erfolgt die Verriegelung der Pendeltrennwände mit Hilfe von an ihren Unterkanten angeordneten, in entsprechende Öffnungen des Laderaumbodens eingreifenden Zapfen. Um bei starrer Ausbildung dieser Zapfen die Pendeltrennwände in eine Entriegelungsstellung anheben zu können, in welcher sie entlang der Längsspriegel verfahrbar sind bzw. zum Entladen auspendeln können, erfolgt die Aufhängung der Pendeltrennwände an den entlang den Längsspriegeln verlaufenden Führungen vorzugsweise über Exzenterkurbelmechanismen, mittels derer die Pendeltrennwände wahlweise in eine Entriegelungsstellung anhebbar bzw. eine Verriegelungsstellung absenkbar sind. Dabei kann die Rollenachse als Exzenterkurbelwelle dienen und an ihrem äußeren Stirnende mittels eines auf- oder einsteckbaren Schlüssels drehbar sein, während ein daran angeordneter Exzenterkurbelzapfen als Scharnierzapfen für die Aufhängung der Pendeltrennwände ausgebildet ist und durch Drehung der Exzenterkurbelwelle bis in eine über dem oberen Totpunkt liegende Anschlagstellung hinaus schwekbar ist, so daß die Pendeltrennwand sich in der angehobenen Stellung in einer stabilen, leicht verfahrbaren Position befindet.

Ein Ausführungsbeispiel der Erfindung wird nachstehend unter Bezugnahme auf die anliegenden Zeichnungen mehr im einzelnen beschrieben. In den Zeichnungen zeigen:

Fig. 1                    ein Schiebeverdeck-Planengestell
                          nach der Erfindung für einen
                          Lastwagenanhänger in Seitenansicht,

Fig. 2                    das Planengestell in Draufsicht,

Fig. 3                    einen Querschnitt eines Längs-
                          spriegels mit einem darin ge-

führten Gleitkörper und dessen
Verbindung mit einem Querspriegel,

die Fig. 4a und 4b     eine erste Ausführungsvariante
eines Gleitkörpers,

die Fig. 5a und 5b     eine zweite Ausführungsvariante
eines Gleitkörpers,

Fig. 6     eine Klemmvorrichtung zur Fixierung der Plane an der Bordwand
in Frontansicht,

die Fig. 7 und 8     Querschnitte in den Ebenen VII-VII
bzw. VIII-VIII in Fig. 6,

die Fig. 9 und 10     in Frontansicht bzw. Seiten
ansicht eine Pendeltrennwand zur
Querunterteilung des Laderaums,

die Fig. 11 und 12     Einzelheiten der Pendeltrennwandaufhängung in Front- und
Seitenansicht,

die Fig. 13 und 14     jeweils im Querschnitt einen
Bordwandverschluß in geöffneter
bzw. geschlossener Stellung, und

Fig. 15     den Bordwandverschluß mit
Betätigungshebel in Seitenansicht.

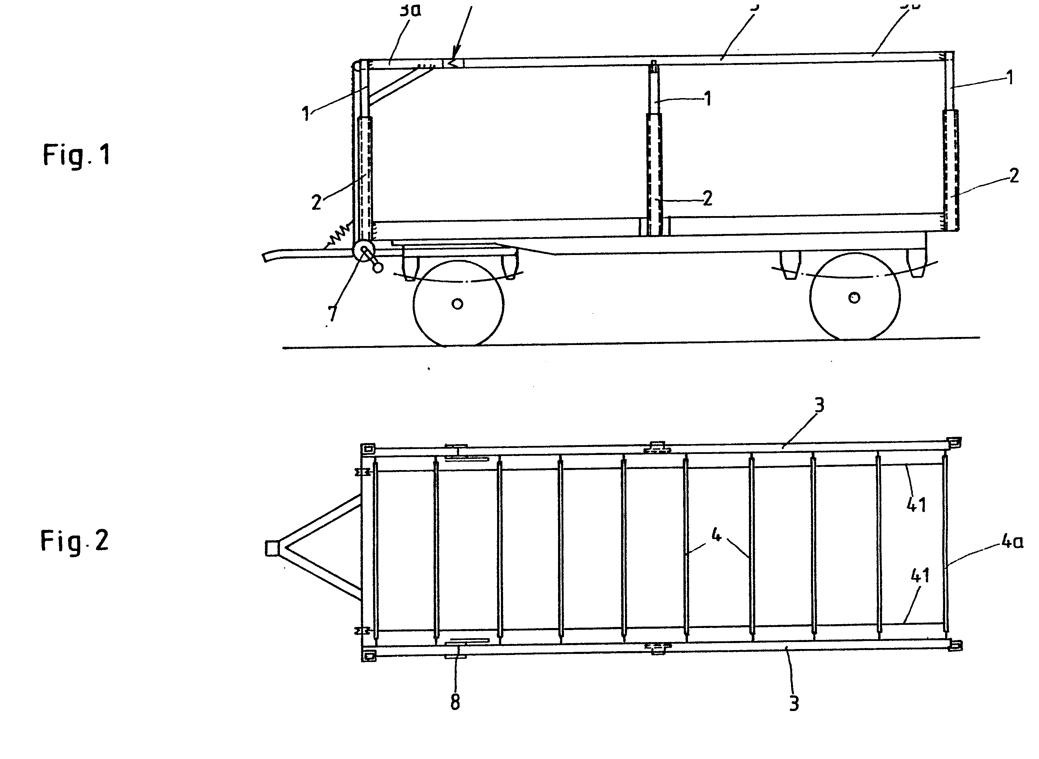

Die Fig. 1 und 2 zeigen in Seitenansicht und Draufsicht ein Schiebeverdeck-Planengestell nach der Erfindung
auf einen Lastwagenanhänger.

Das Planengestell besteht aus beiderseits der Ladefläche angeordneten vertikalen Stützen 1, die zwecks Höhenverstellbarkeit des Planengestells in hohlen Rungen 2 aus- und einschiebbar geführt und in bestimmten Höhenpositionen arretierbar sind, weiter aus zwei von den vertikalen Stützen 1 getragenen Längsspriegeln 3 und einer Anzahl von in der Draufsicht nach Fig. 2 sichtbaren, zwischen den beiden Längsspriegeln 3 verlaufenden Querspriegeln 4.

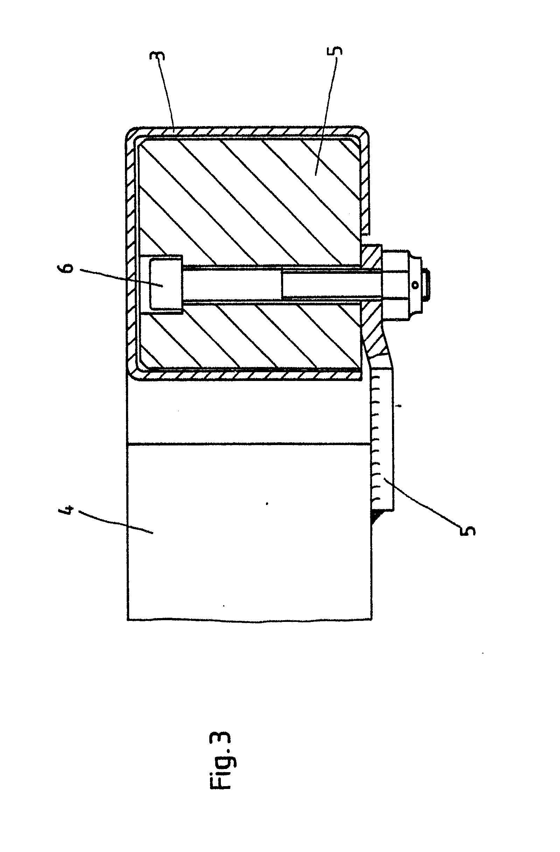

Wie aus Fig. 3 hervorgeht, sind die beiden Längsspriegel 3 jeweils als Hohlprofil-Führungsschienen ausgebildet, deren Querschnittsprofil gemäß Fig. 3 beispielsweise etwa quadratisch oder rechteckig, aber auch in anderer Weise polygonal oder kreisrund sein kann. In diesen Führungsschienen sind Gleitkörper 5 mit entsprechendem Querschnittsprofil verschiebbar geführt, die mit den Enden der Querspriegel 4 verbunden sind. Die Verbindung mit dem betreffenden Querspriegelende erfolgt beispielsweise mittels einer an dem Querspriegelende befestigten Lasche 5 und einem Bolzen 6, der durch eine entsprechende Bohrung des Gleitkörpers 5 hindurchverläuft und mit seinen unterem Ende an der Lasche 5 befestigt ist. Der Bolzen 6 sitzt dabei drehbar in der Bohrung des Gleitkörpers 5 und bildet einen Scharnierbolzen mit vertikaler Achse, um welchen der Gleitkörper 5 drehbar ist. Auf diese Weise wird ein Verkanten des Gleitstückes 5 in der Führungsschiene vermieden, wenn der betreffende Querspriegel sich aus seiner exakt quer verlaufenden Position etwas schräg stellen sollte.

Da die Querspriegel 4 alle in der eben beschriebenen Weise über Gleitkörper 5 in den als Führungsschienen ausgebildeten Längsspriegeln 3 verschiebbar geführt sind, lassen sich die Querspriegel zum Öffnen des Verdecks in

Richtung zum vorderen Ende des Planengestells zusammenschieben. Dazu kann ein Seiltrieb mit einer im Bodenbereich des vorderen Laderaumendes angeordneten, mit
Kurbel versehenen Seiltrommel 7 Anwendung finden, die in
Fig. 1 dargestellt ist, deren Seil am hintersten Querspriegel 4a (siehe Fig. 2) befestigt ist. Dieser
Seiltrieb wirkt nur in Öffnungsrichtung, ist dafür aber
äußerst einfach ausgebildet. Zum Schließen des Verdeckes
genügt ein ebenfalls am hintersten Querspriegel 4a
befestigter Zuggurt (nicht dargestellt), mit welchem der
Fahrer das Verdeck nach hinten in seine geschlossene
Stellung ziehen kann. Die einzelnen Querspriegeln sind
durch Verbindungsgurte 41 oder dergleichen miteinander
verbunden, so daß sich beim Schließen des Verdecks die
richtigen gegenseitigen Abstände der Querspriegel voneinander durch Straffen dieser Verbindungsgurte automatisch einstellen.

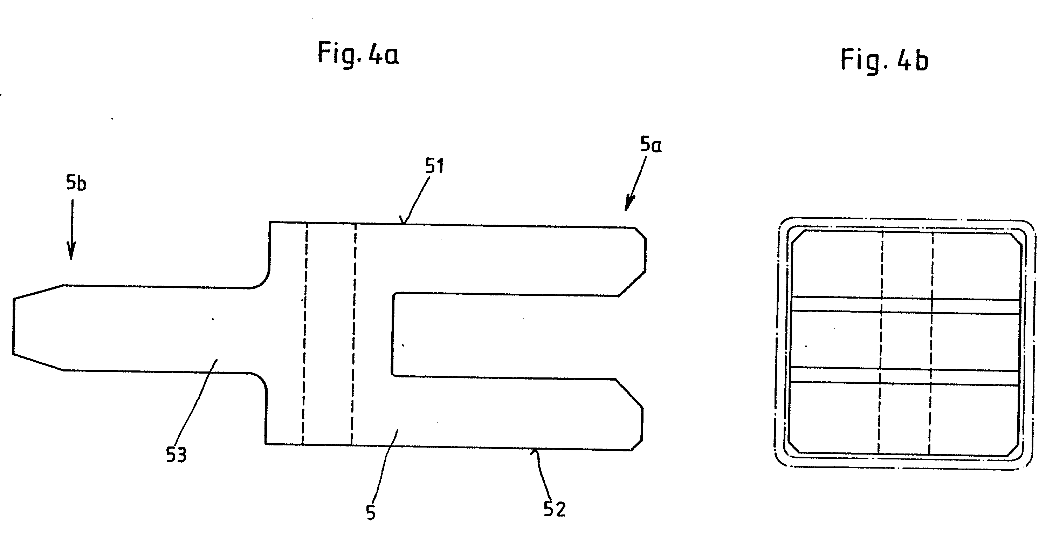

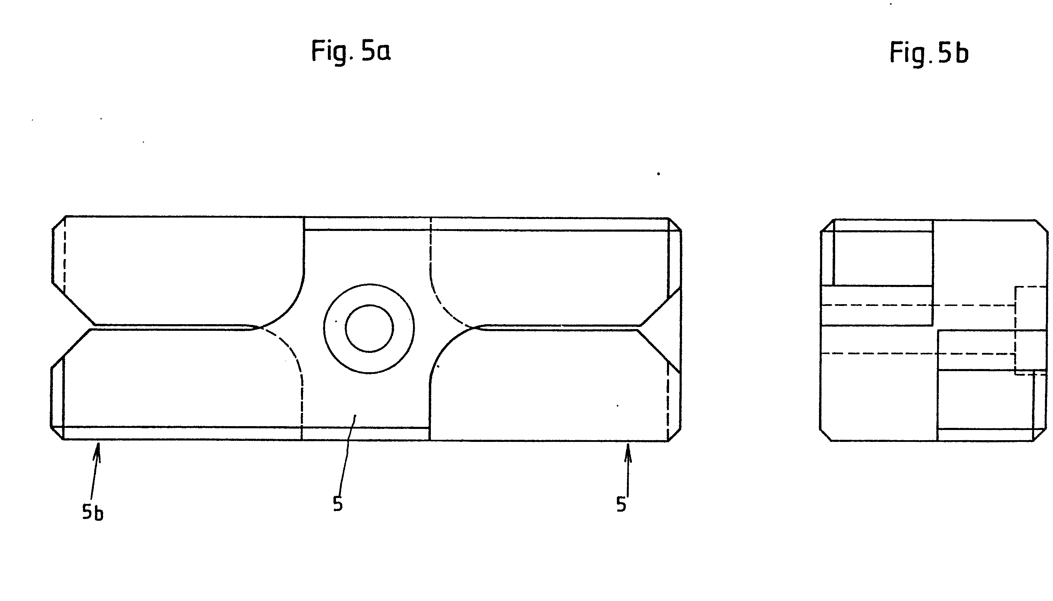

Die Fig. 4a und 4b sowie 5a und 5b zeigen jeweils in
Seiten- und Stirnansicht zwei zweckmäßige Ausführungsvarianten der Gleitkörper 5. Einerseits sollen diese Gleitkörper 5, um ein Verkanten in den sie führenden Führungsschienen zu vermeiden und dadurch ein leichtes Verschieben
der Querspriegel zu ermöglichen, eine ausreichende Führungslänge haben, andererseits sollen aber die Querspriegel
zum möglichst weitgehenden Öffnen des Verdecks möglichst
eng zusammenschiebbar sein. Die beiden dargestellten Ausführungsmöglichkeiten von Gleitkörpern 5 tragen diesen
beiden Anforderungen Rechnung, indem sie teilweise zusammenschiebbar gestaltet sind, ohne dabei jedoch ihre
Führungslänge zu verringern.

Bei der Ausführungsvariante nach den Fig. 4a und 4b
ist das eine Ende 5a des Gleitkörpers 5 gegabelt und das
andere Ende 5b dieses Gleitkörpers dazu komplementär stegartig ausgebildet, so daß sich die aufeinanderfolgenden Gleitstücke teilweise ineinanderschieben lassen. Während die obere Gleitfläche 51 und die untere Gleitfläche 52 (Fig. 4a) dieses Gleitkörpers sich nur über etwas mehr als die Hälfte der Gleitkörperlänge erstrecken, entspricht die wirksame Länge der beiden seitlichen Gleitflächen 53, die einem seitlichen Verkanten des Gleitkörpers entgegenwirken, über die volle Gleitkörperlänge und ergeben dadurch eine optimale Führung.

Bei der Ausführungsvariante nach den Fig. 5a und 5b ist die Gestaltung der zueinander komplementären Querschnittsprofile der beiden Gleitkörperenden 5a und 5b dahingehend abgewandelt, daß, wie aus der Stirnansicht nach Fig. 5b hervorgeht, diese Endabschnitte jeweils durch zwei jeweils einem Viertel des Vollquerschnitts des Gleitkörpers entsprechende Zapfen gebildet sind, die an einem Endabschnitt 5a auf der einen Gleitkörperdiagonalen und beim anderen Endabschnitt 5b auf der anderen Gleitkörperdiagonalen liegen, so daß die aufeinanderfolgenden Gleitkörper wiederum teilweise zusammenschiebbar sind. Dabei hat die letztere Ausführungsform den Vorzug, daß sowohl die obere und untere als auch die beiden seitlichen Gleitflächen des Gleitkörpers 5 eine wirksame Länge haben, die der Gesamtlänge des Gleitkörpers entspricht. Allerdings ist die Steifigkeit der ersteren Ausführungsvariante nach den Fig. 4a und 4b mit Bezug auf die Seitenführung größer als die Steifigkeit der letzteren Ausführungsvariante nach den Fig. 5a und 5b.

In jedem Fall sind die Gleitkörper vorzugsweise aus einem reibungsarmen Kunststoff wie beispielsweise PVC oder Polyamid hergestellt, wodurch einerseits eine leichte Verschiebbarkeit der Qurspriegel bei minimalen Aufwand für Schmierung und andererseits auch eine hohe Verschleißfestigkeit der Konstruktion erreicht wird.

Selbstverständlich können anstelle der Gleitkörper auch mittels Rollen in bzw. an den Längsspriegeln geführte Schiebekörper Anwendung finden, wobei der damit erreichte Vorteil einer noch geringeren Reibung beim Verschieben der Quersspriegel allerdings durch einen wesentlich höheren konstruktiven Aufwand erkauft werden muß.

Wie aus den Fig. 1 und 2 außerdem hervorgeht, sind die beiden Längssspriegel 3 zweckmäßigerweise geteilt ausgebildet, wobei die Länge des vorderen Teils 3a der Quersspriegel der Länge des zusammengeschobenen Verdecks entspricht, also sämtliche Quersspriegel im zusammengeschobenen Zustand aufnehmen, während der hintere Teil 3b der Längssspriegel sich über die restliche Länge erstreckt. Die beiden Längssspriegelteile 3a und 3b sind jeweils mittels einer Schnellkupplung 8 beliebiger Bauart miteinander verbunden. Dadurch ist es möglich, bei geöffnetem Verdeck den gesamten hinteren Teil des Planengestells, bestehend aus den hinteren Längssspriegelteilen 3b und den zugehörigen Stützen 1, schnell und einfach abzubauen, beispielsweise um eine Beladung oder Entladung zu erleichtern.

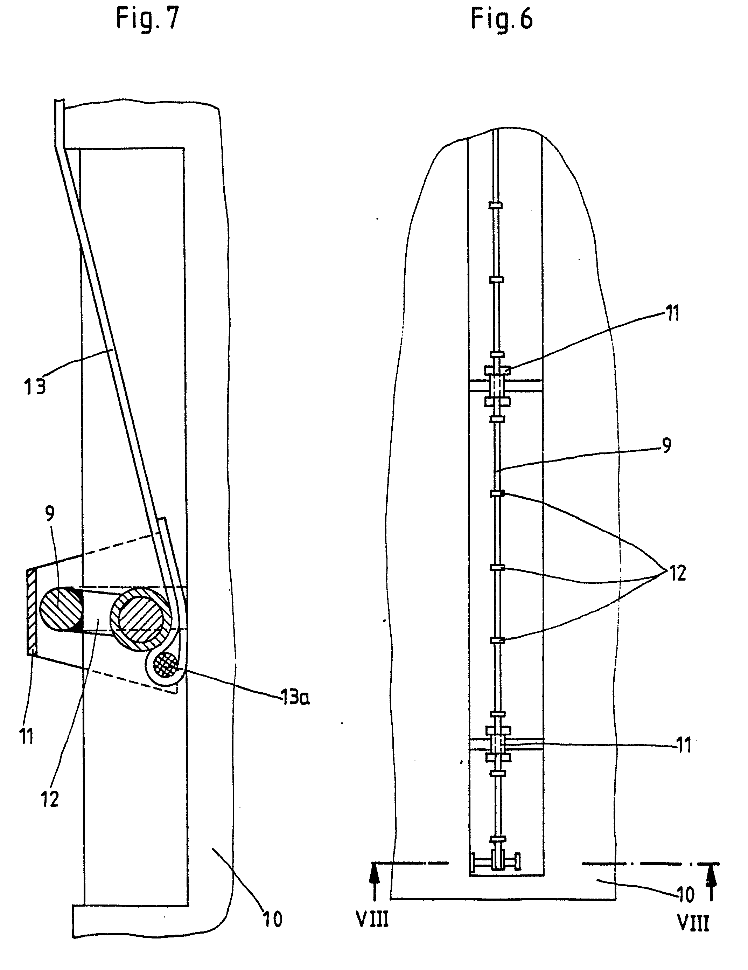

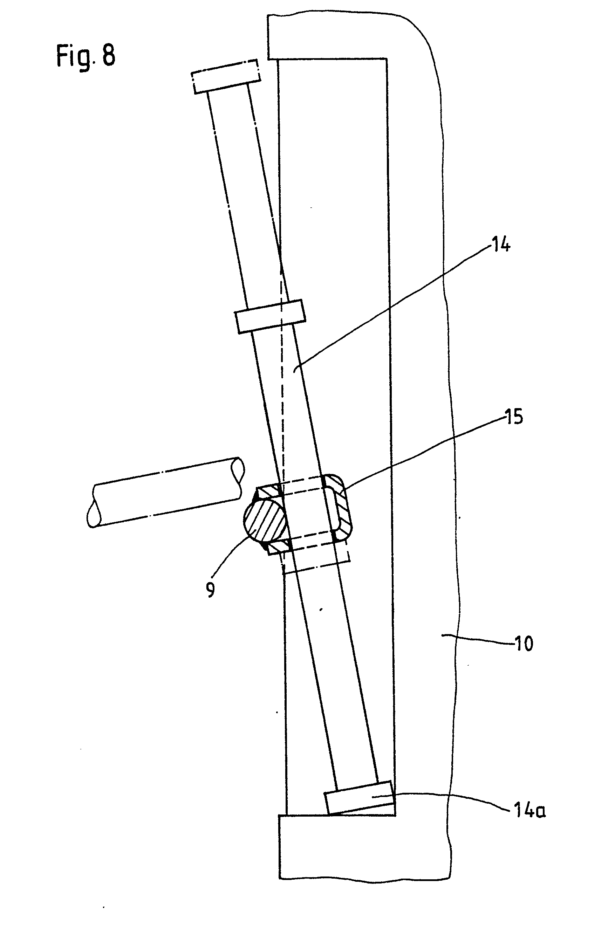

Die Fig. 6, 7 und 8 zeigen eine in Verbindung mit dem Planengestell zu verwendende Klemmvorrichtung zur Fixierung der Plane des Schiebeverdecks in geschlossenem Zustand an den Bordwänden des Fahrzeugs. Diese Klemmvorrichtung weist, wie aus der Frontansicht eines Bordwandausschnitts in Fig. 6 und dem Querschnitt nach Fig. 7 ersichtlich ist, eine Stange 9 auf, die mit etwas Abstand vorderhalb der Bordwand 10 und entlang derselben verläuft und mittels Haltern 11 um ihre Längsachse drehbar an der Bordwand gehaltert ist. Diese Stange 9 trägt eine Mehrzahl von finger- oder nockenartigen Klemmstücken 12, die dazu dienen, die Plane 13 gegen die Bordwand 10 zu klemmen. An mindestens einem Ende der Stange 9 ist gemäß Fig. 8 ein Hebel 14 zum Drehen der Stange angeordnet. Dieser Hebel 14 ist in einer Öse 15, die starr an der Stange 9 befestigt ist, verschiebbar geführt. In seiner Ruhestellung, in welcher die Klemmstücke 12 sich in der Klemmstellung befinden, ist der Hebel 14 in der Öse 15 gemäß Fig. 8 nach unten geschoben und sein unteres Ende 14a stützt sich an der Bordwand 10 ab, um ein ungewolltes Schwenken des Hebels 14 in Öffnungsrichtung der Klemmstücke 12 zu verhindern. Zum Lösen der Klemmstücke 12 wird der Hebel 14 in der Öse 15 nach oben gezogen und läßt sich dann von der Bordwand weg ausschwenken, wodurch die Stange 9 mit den Klemmstücken 12 so gedreht wird, daß diese Klemmstücke nach oben in ihre Lösestellung geschwenkt werden. In die Unterkante der Plane 13 ist zweckmäßigerweise ein Seil 13a oder dergleichen eingenäht, um durch die so geschaffene Verdickung der Planenunterkante ein Herausrutschen der Plane unter den geschlossenen Klemmstücken 12 zu vermeiden.

Mit der eben beschriebenen Klemmvorrichtung läßt sich die geschlossene Plane mit einem Handgriff an der Bordwand fixieren oder lösen, so daß das bei der herkömmlichen Verschnürung der Plane notwendige langwierige Ein- oder Ausfädeln der Schnüre entfällt.

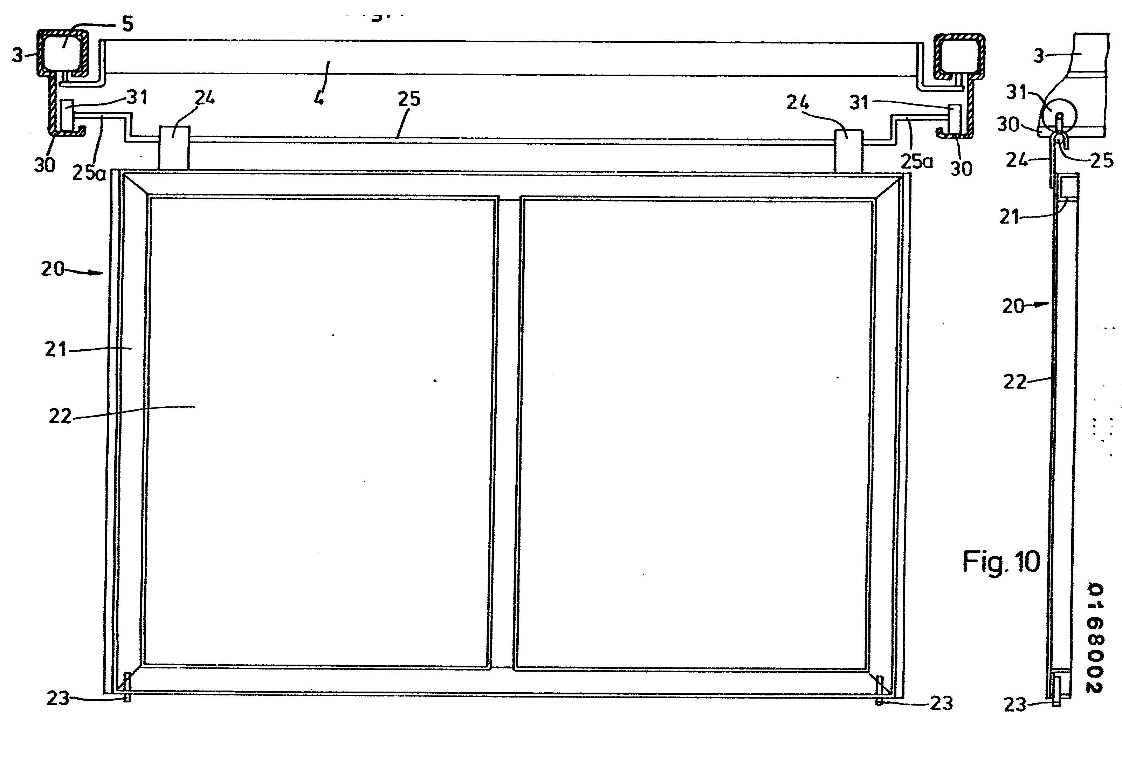

Die Fig. 9 und 10 zeigen in Front- und Seitenansicht eine Pendeltrennwand, die zur Querunterteilung des Laderaums in Verbindung mit den erfindungsgemäßen Planengestell verwendbar ist. Die Pendeltrennwand 20 besteht aus einem steifen Rahmen 21 aus Profilstäben und einer Trennwandfläche 22, die aus Blechplatten oder auch aus einer ausreichend stabilen flexiblen Bespannung des Rahmens 21 bestehen kann. Die Pendeltrennwand ist mit an ihrem unteren Ende angeordneten Zapfen 23 in entsprechenden Öffnungen des Laderaumbodens arretierbar und an ihrem oberen Ende mittels Laschen 24 pendelfähig an einer Querstange 25 aufgehängt.

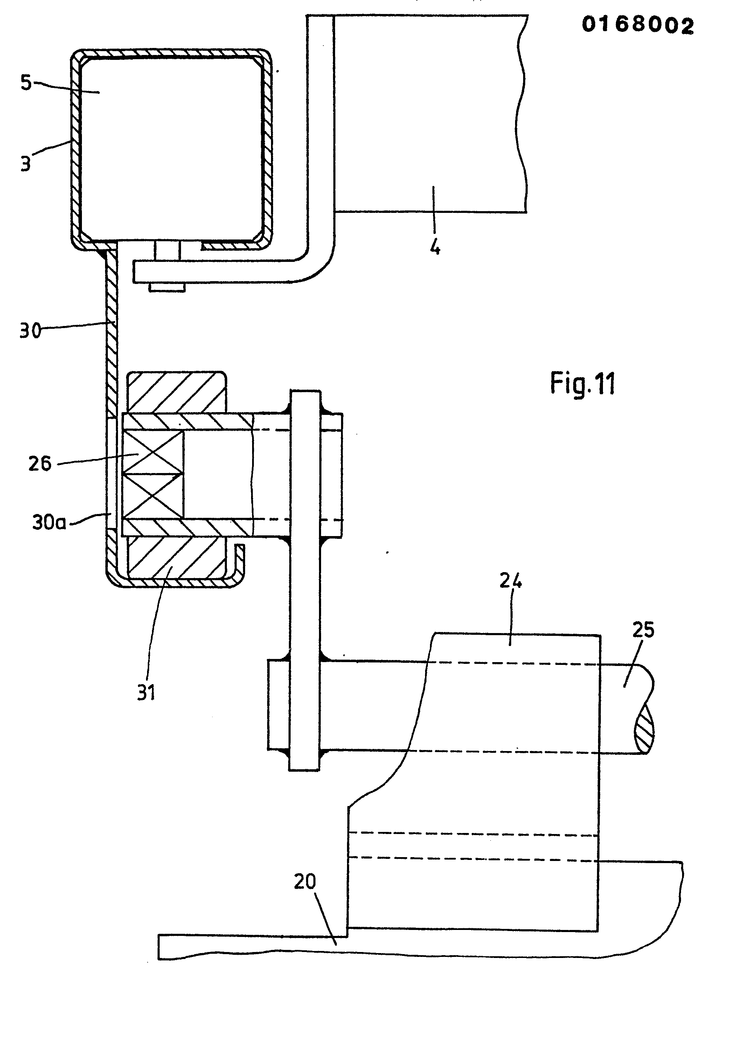

Wie aus Fig. 9, besonders aber aus der größeren Darstellung nach Fig. 11 hervorgeht, sind an den beiden
Längsspriegeln zusätzliche Führungsschienen 30 angeordnet,
auf denen die, die Pendeltrennwand 20 tragende Querstange 25
mittels Rollen 31 in Längsrichtung des Laderaumes verfahrbar ist.

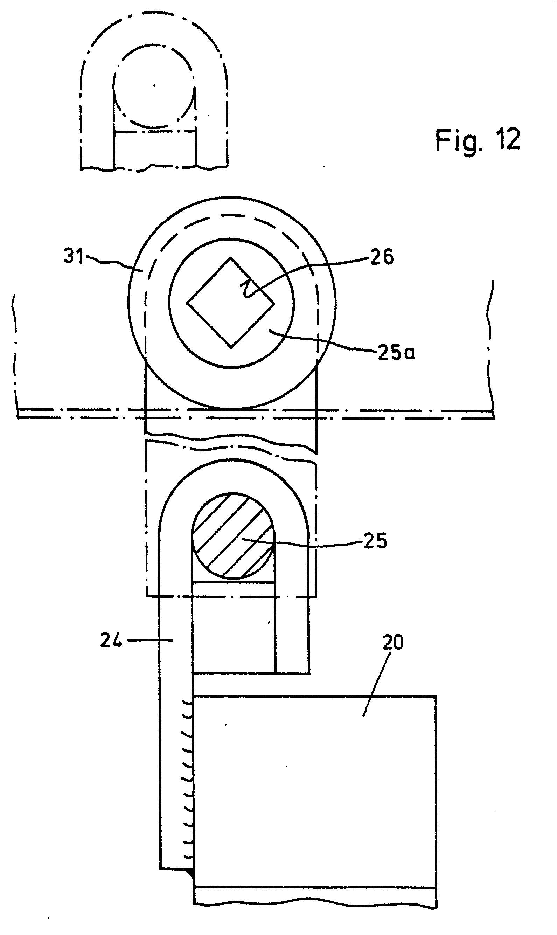

Da die Arretierungszapfen 23 am unteren Pendeltrennwandende starr angeordnet sind, muß die Pendeltrennwand
zum Entriegeln, damit sie zum Entladen beim Kippen der
Ladefläche auspendeln kann, sowie zum Verfahren entlang
der Führungsschienen 30 der beiden Längsspriegel 3 in
eine Entriegelungsstellung angehoben werden. Dazu ist die
Querstange 25 an ihren beiden Enden gekröpft, wobei die
gekröpften Enden 25a den Lagerzapfen für die betreffende
Rolle 31 bilden. Außerdem ist das gekröpfte Ende mit
einem Schlüsselvielkant 26 ausgebildet, der an den
möglichen Arretierungsstellen entlang der Laderaumlänge
durch eine Aussparung 30a der Führungsschiene 30 hindurch zum Aufstecken eines Schlüssels zugänglich ist,
mittels welchem die Querstange 25 um die Längsachse ihrer
gekröpften Längsabschnitte 25a drehbar ist. Die Kröpfungen
der Querstange 25 wirken dabei als Exzenterkurbeln zum
Hochschwenken des die Pendeltrennwand 20 tragenden Mittelabschnitts der Querstange 25 in die Entriegelungsstellung
bzw. zum Abschwenken derselben in die Verlegelungsstellung.
Diese beiden Stellungen sind in Fig. 12 in der Seitenansicht dargestellt. Beim Hochschwenken in die Entriegelungsstellung wird die Querstange 25 bis über den oberen Totpunkt der Exzenterkurbelanordnung hinaus gegen einen Anschlag
gedreht, so daß die Pendeltrennwand stabil in ihrer
angehobenen Stellung hängt und bequem entlang der Führungsschienen 30 verfahrbar ist.

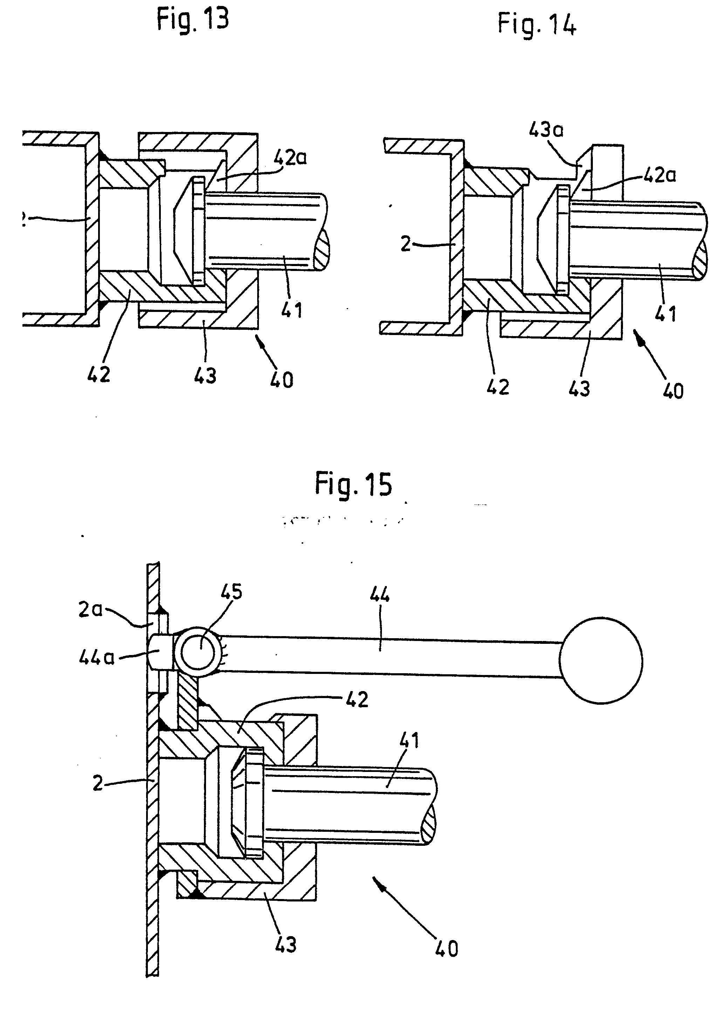

In den Fig. 13 bis 15 ist ein Bordwandverschluß 40 dargestellt, der seitlich an den hohlen Rungen 2 angeordnet werden kann und daher mit nach Außen über die geschlossene Bordwand übersteht.

Dieser Bordwandverschluß 40 besteht aus einem an der Bordwand befestigten Bolzen 41 und zwei konzentrischen, relativ zueinander drehbaren Hülsen 42 und 43, von denen die innere Hülse 42 an der Runge 2 befestigt und die äußere Hülse 43 mit einem Betätigungshebel 44 versehen ist. Die beiden Hülsen 42 und 43 weisen, wie aus dem Querschnitt nach Fig. 13 hervorgeht, jeweils einen seitlichen Einführungsschlitz 42a bzw. 43a auf, durch welchen der Bolzen 41 seitlich in diese Hülsen hinein bzw. aus ihnen heraus bewegbar ist. Die in Fig. 13 dargestellte Relativstellung der beiden Hülsen 42 und 43 mit sich deckenden Schlitzen 42a und 43a stellt die Öffnungsstellung des Bordwandverschlußes dar, in welcher der Bolzen 41 ein- bzw. ausführbar ist, während Fig. 14 die Schließstellung des Bordwandverschlusses mit relativ zueinander so gedrehten Hülsen 42 und 43 zeigt, daß der Bolzen 41 innerhalb der Hülsenanordnung arretiert ist.

In der Seitenansicht nach Fig. 15 ist auch der an der äußeren Hülse 43 angeordnete Betätigungshebel 44 dargestellt, der um eine Achse 45 abknickbar ist. Dieser Hebel hat eine Nase 44a, die, wenn der Hebel in der Schließstellung des Bordwandverschlusses abgeknickt ist, in eine entsprechende Öffnung 2a der Runge eingreift und damit dem Hebel 44 gegen eine unbeabsichtigte Öffnungsbewegung sichert. Das Gewicht des Hebels hält dabei diesen Hebel von selbst in seiner abgeknickten Stellung.

PATENTANWALT
DIPL. ING. R. HÖLZER
DIPL. ING. (FH) W. GALLO
PHILIPPINE WELSER STRASSE 14
ZUGELASSENE VERTRETER VOR DEM
EUROPÄISCHEN PATENTAMT
PROFESSIONAL REPRESENTATIVES
BEFORE THE EUROPEAN PATENT OFFICE
MANDATAIRES AGRÉÉS PRÈS L'OFFICE
EUROPÉEN DES BREVETS
8900 AUGSBURG
TELEFON 9821 6475
TELEX 532202 PATOL D

Augsburg, den 4. Juli 1985

Patentansprüche

1. Schiebeverdeck-Planengestell, insbesondere für Lastkraftwagen und Anhänger, bestehend aus zwei von vertikalen Stützen getragenen, die Laderaumlänge überspannenden Längsspriegeln und einer Anzahl von Querspriegeln, die mit längs der als Führungsschienen ausgebildeten Längsspriegel beweglichen Schiebekörpern verbunden sind, und mit Mitteln zum Öffnen und Schließen des Schiebeverdecks, dadurch gekennzeichnet, daß die Querspriegel (4) direkt mit den Schiebekörpern (5) verbunden und untereinander durch flexible Zwischenglieder (41) verbunden sind und daß die Mittel zum Öffnen und Schließen des Schiebeverdecks am hintersten Querspriegel (4a) angreifen.

2. Planengestell nach Anspruch 1, dadurch gekennzeichnet, daß die Schiebekörper als Gleitkörper (5) ausgebildet sind, die um eine vertikale Achse (6) drehbar mit den Querspriegeln (4) verbunden sind.

3. Planengestell nach Anspruch 1 oder 2, dadurch gekennzeichnet, daß die Längsspriegel (3) als die Schiebekörper (5) aufnehmende Hohlprofil-Führungsschienen ausgebildet sind.

4. Planengestell nach einem der Ansprüche 1 bis 3, dadurch gekennzeichnet, daß die Schiebekörper (5) als längliche Prismenkörper ausgebildet sind, die jeweils über ihre ganze Länge verlaufende, mit Führungsflächen der Führungsschienen (3) zusammenwirkende Gleitflächen aufweisen, jedoch teilweise ineinanderschiebbar gestaltet sind.

5. Planengestell nach Anspruch 4, dadurch gekennzeichnet, daß die Schiebekörper (5) an ihren beiden Enden (5a, 5b) jeweils mit zueinander komplementären Querschnittsprofilen ausgebildet sind, bei denen jeweils ein Teil ihres Umfangs durch eine Gleitfläche gebildet ist.

6. Planengestell nach einem der Ansprüche 2 bis 5, dadurch gekennzeichnet, daß die Schiebekörper (5) aus reibungsarmen Kunststoff bestehen.

7. Planengestell nach einem der Ansprüche 1 bis 6, dadurch gekennzeichnet, daß die Längsspriegel (3) jeweils geteilt ausgebildet und ihre Längenabschnitte (3a, 3b) mittels einer Schnellkupplung (8) trennbar bzw. verbindbar sind.

8. Planengestell nach einem der Ansprüche 1 bis 7, dadurch gekennzeichnet, daß die vertikalen Stützen (1) in hohlen Rungen (2) aus- und einschiebbar geführt und in bestimmten Vertikalpositionen arretierbar sind.

9. Planengestell nach Anspruch 8, dadurch gekennzeichnet, daß die hohlen Rungen (2) seitlich angeordnete Bordwandverschlüsse (40) aufweisen, die jeweils aus einem Bolzen (41) und zwei konzentrische, relativ zueinander drehbare und jeweils mit einem seitlichen Einführungsschlitz (42a, 43a) versehenen Hülsen (42, 43) besteht, wobei eine (43) der beiden Hülsen mit einem Betätiungsorgan (44) zum Drehen versehen und von den beiden anderen Teilen das eine an der Runge und das andere an der Bordwand (10) befestigt ist.

10. Planengestell nach Anspruch 9, dadurch gekennzeichnet, daß der Bolzen (41) einem im Durchmesser
vergrößerten Kopf (41a) und die innere Hülse (42) eine
mit dessen rückwärtiger Stirnfläche zusammenwirkende
axiale Schulter (42b) aufweist.

11. Planengestell nach Anspruch 9 oder 10, dadurch
gekennzeichnet, daß das Betätigungsorgan ein in der
Schließstellung des Bordwandverschlusses (40) abknickbarer
Hebel (44) ist, der in seiner bei geschlosseneem Bordwandverschluß abgeknickten Stellung mit einer daran gebildeten Nase (44a) in eine entsprechende Öffnung (2a)
der Runge eingreift.

12. Planengestell nach einem der Ansprüche 1 bis 11,
dadurch gekennzeichnet, daß eine Klemmvorrichtung (9, 12)
zur Fixierung der Plane (13) an den Bordwänden (10) vorgesehen ist, die aus einer mit Abstand entlang der Bordwand (10)
verlaufend an dieser gehalterten drehbaren Stange (9)
und aus damit starr verbundenen finger- oder nockenartigen
Klemmstücken (12) besteht, die durch Drehen der Stange (9)
zur Bordwand hin bzw. von dieser weg schwenkbar sind.

13. Planengestell nach einem der Ansprüche 1 bis 12,
dadurch gekennzeichnet, daß die Längsspriegel (3) mit
Längsführungen (30) zum Verschieben von quer zur Ladefläche verlaufenden Pendeltrennwänden (20) in Längsrichtung der Ladefläche versehen sind.

14. Planengestell nach Anspruch 13, dadurch gekennzeichnet, daß die Pendeltrennwände (20) auf Rollen (31)
entlang der Längsspriegel (3) verfahrbar geführt sind.

15. Planengestell nach Anspruch 13 oder 14, dadurch gekennzeichnet, daß die Aufhängung der Pendeltrennwände (20) an den entlang den Längsspriegeln (3) verlaufenden Führungen (30) über Exzenterkurbelmechanismen (25a) erfolgt, mittels derer die Pendeltrennwände (20) wahlweise in eine Entriegelungsstellung anhebbar bzw. eine Verriegelungsstellung absenkbar sind.

0168002

Fig.1

Fig.2

0168002

Fig. 3

Fig. 4b

Fig. 4a

5a

51

5

52

53

5b

Fig.5b

Fig.5a

5

5

5b

0168002

Fig. 7

Fig. 6

13

9

11

12

13a

10

11

9

12

11

10

VIII

VIII

0168002

Fig. 8

14

15

9

10

14a

0168002

Fig.10

0168002

5

3

30

26

30a

31

4

Fig.11

24

25

20

0168002

Fig. 12

0168002

Fig. 13

Fig. 14

Fig. 15